Europäisches Patentamt

European Patent Office

Office européen des brevets

(19)

(11) Numéro de publication : **0 023 449**
**B1**

(12)                    # FASCICULE DE BREVET EUROPÉEN

(45) Date de publication du fascicule du brevet :
14.09.83

(21) Numéro de dépôt : **80401078.3**

(22) Date de dépôt : **18.07.80**

(51) Int. Cl.³ : **G 01 F   3/38**, **A 01 J   7/00**

(54) **Compteur de liquide, notamment compteur à lait, muni d'un dispositif de prélèvement d'échantillons.**

(30) Priorité : **18.07.79 FR 7918555**

(43) Date de publication de la demande :
**04.02.81 Bulletin 81/05**

(45) Mention de la délivrance du brevet :
**14.09.83 Bulletin 83/37**

(84) Etats contractants désignés :
**DE GB NL**

(56) Documents cités :
**US A 2 936 622**
**US A 3 919 975**
**US A 4 112 758**

(73) Titulaire : **CENTRE NATIONAL DU MACHINISME AGRICOLE, DU GENIE RURAL, DES EAUX ET DES FORETS (CEMAGREF)**
**Parc de Tourvoie**
**F-92160 Antony (FR)**

(72) Inventeur : **Montalescot, Jean Bernard**
**1, rue Saint Laurent**
**Villemoisson 91360 Epinay sur Orge (FR)**

(74) Mandataire : **Joly, Jean Jacques et ai**
**CABINET BEAU DE LOMENIE 55, rue d'Amsterdam**
**F-75008 Paris (FR)**

EP 0 023 449 B1

Jouve, 18, rue St-Denis, 75001 Paris, France

Compteur de liquide, notamment compteur à lait, muni d'un dispositif de prélèvement d'échantillons

La présente invention concerne un compteur de liquide, notamment un compteur à lait utilisable pour mesurer la quantité de lait produite par un animal au cours d'une traite dans une installation de traite automatique.

Plus particulièrement, la présente invention a pour objet un compteur de liquide du type comportant un dispositif de mesure recevant le liquide dégazé au moyen d'un dispositif de dégazage, une première et une seconde vannes actionnées pneumatiquement pour commander respectivement l'entrée de liquide dans le dispositif de mesure et la sortie de liquide hors du dispositif de mesure, un capteur associé au dispositif de mesure pour fournir un signal de mesure à chaque fois qu'une quantité prédéterminée de liquide inférieure à la capacité totale du dispositif de mesure a été introduite dans celui-ci, et un dispositif de commande et de comptage recevant les signaux de mesure et commandant les première et seconde vannes pour provoquer la sortie du liquide hors du dispositif de mesure à chaque fois que ladite quantité prédéterminée y a été introduite.

Le brevet US-A-2 936 622 a pour objet un appareil de séparation gaz-liquide et de comptage répondant à cette définition et plus particulièrement destiné à mesurer les quantités de pétrole fournies à un réservoir de stockage.

Du fait de son encombrement et de sa structure, cet appareil connu ne peut répondre aux exigences actuelles du contrôle laitier, exigences selon lesquelles l'on doit disposer d'un compteur de liquide non seulement robuste, précis et facile d'emploi et d'entretien, mais encore pouvant être facilement transporté, monté et démonté, et pouvant être associé à un dispositif de prélèvement d'échantillons qui doit être également automatique, démontable et transportable.

Les brevets US-A-3 919 975 et US-A-4 112 758 ont bien pour objet des compteurs à lait permettant une mesure automatique ou semi-automatique, mais ne répondent pas non plus à ces exigences. Ainsi, dans le cas du brevet US-A-3 919 975, les vannes commandant l'entrée du liquide dans le dispositif de mesure et la sortie du liquide hors de ce dispositif sont des vannes électromagnétiques qui consomment une quantité notable d'électricité. De plus, bien qu'un compartiment annexe soit prévu pour recueillir un échantillon de lait à travers un passage capillaire, il ne s'agit pas d'un dispositif de prélèvement démontable et transportable, et l'échantillon recueilli doit apparemment être prélevé de façon manuelle.

Quant au brevet US-A-4 112 758, il ne montre pas de dispositif de prélèvement d'échantillons.

La présente invention a pour but de fournir un compteur à liquide capable de satisfaire les exigences sus-mentionnées relatives au contrôle laitier.

Ce but est atteint au moyen d'un compteur du type défini plus haut, et caractérisé en ce qu'il comporte en outre un dispositif de prélèvement d'échantillons avec une conduite de prélèvement qui est munie d'une troisième vanne, et qui relie le dispositif de dégazage à un orifice formé dans le fond d'une chambre dans laquelle s'étend la conduite de prélèvement, orifice auquel un récipient à échantillon peut être raccordé à l'extérieur de la chambre, et en ce que lesdites première, seconde et troisième vannes sont actionnées au moyen d'électrovannes commandées par des signaux électriques produits par le dispositif de commande et de comptage en réponse aux signaux de mesure, la troisième vanne étant commandée pour ouvrir la conduite de prélèvement, pendant un intervalle de temps déterminé, en réponse à au moins un signal de mesure produit au cours d'une opération de comptage.

Ainsi apparaît un avantage de l'invention, avantage qui réside dans le fait que la mesure et le prélèvement d'échantillons sont effectués sous la commande d'électrovannes qui consomment peu d'électricité. Ces électrovannes peuvent alors être simplement alimentées au moyen d'une batterie fournissant l'ensemble de l'énergie électrique nécessaire au fonctionnement du compteur. On dispose d'un compteur précis et facilement transportable, ce qui est un avantage précieux dans le cas de compteur à lait utilisé dans une salle de traite automatique, puisqu'il suffit alors, pour le mettre en service, de le brancher en sortie d'un faisceau trayeur et de le raccorder à la source de vide de la salle de traite.

Plusieurs modes de réalisation différents pourront être utilisés pour le capteur du dispositif de mesure.

Un capteur de niveau à flotteur constitue un capteur robuste et bon marché présentant une précision satisfaisante, le flotteur provoquant par exemple la fermeture d'un interrupteur électrique pour l'émission du signal de mesure lorsqu'il parvient à un niveau prédéterminé dans le récipient de mesure.

Selon d'autres modes de réalisation, on pourra utiliser un capteur de pression fournissant un signal de mesure représentatif de la différence de pression entre le fond et le sommet du récipient de mesure, ou un capteur résistif comportant au moins une électrode placée à un niveau déterminé dans le récipient de mesure, ou encore, un capteur capacitif.

Lorsqu'une grande précision est recherchée, on peut utiliser un capteur de poids, par exemple un capteur à jauge de contrainte auquel le récipient de mesure est suspendu. Dans le cas du compteur à lait, les légères variations de densité au cours de la traite sont alors prises en compte pour la mesure de la quantité de lait, exprimée en poids, fournie par un animal au cours d'une traite.

Selon une particularité du compteur conforme à l'invention, la vanne de la conduite de prélèvement est commandée par le dispositif de commande et de comptage en réponse à chaque signal de mesure pour ouvrir la conduite de prélèvement pendant un intervalle de temps déterminé au moins une fois pour chaque mesure de ladite quantité prédéterminée de liquide. On constitue ainsi un échantillon représentatif de tout le liquide mesuré.

Selon une autre particularité du compteur conforme à l'invention, la conduite de prélèvement relie le dispositif de dégazage à un orifice formé dans le fond d'une chambre dans laquelle s'étend la conduite de prélèvement, orifice auquel un récipient à échantillon peut être raccordé à l'extérieur de la chambre. Des moyens sont prévus pour homogénéiser le liquide prélevé puis pour refouler le liquide en excès dans la chambre à la fin d'une opération de comptage. On réalise alors finalement un prélèvement proportionnel au débit de liquide d'un échantillon à volume constant.

D'autres particularités et avantages du compteur de liquide conforme à l'invention ressortiront à la lecture de la description d'un mode particulier de réalisation, description faite à titre indicatif mais non limitatif, en référence aux dessins annexés sur lesquels :

— la figure 1 est un schéma d'ensemble de principe d'un compteur de liquide conforme à l'invention,

— la figure 2 est une vue schématique d'ensemble d'un mode de réalisation du compteur illustré par la figure 1, vue en élévation et partiellement en coupe suivant la ligne II-II de la figure 3,

— la figure 3 est une vue partielle en coupe suivant la ligne III-III de la figure 2.

Le compteur de liquide décrit ci-après est un compteur à lait utilisable pour mesurer la quantité de lait fournie par un animal lors d'une traite effectuée à un poste d'une salle de traite automatique. Bien qu'il s'agisse là d'une application plus particulièrement visée dans le cadre de la présente invention, elle ne saurait toutefois avoir un caractère limitatif.

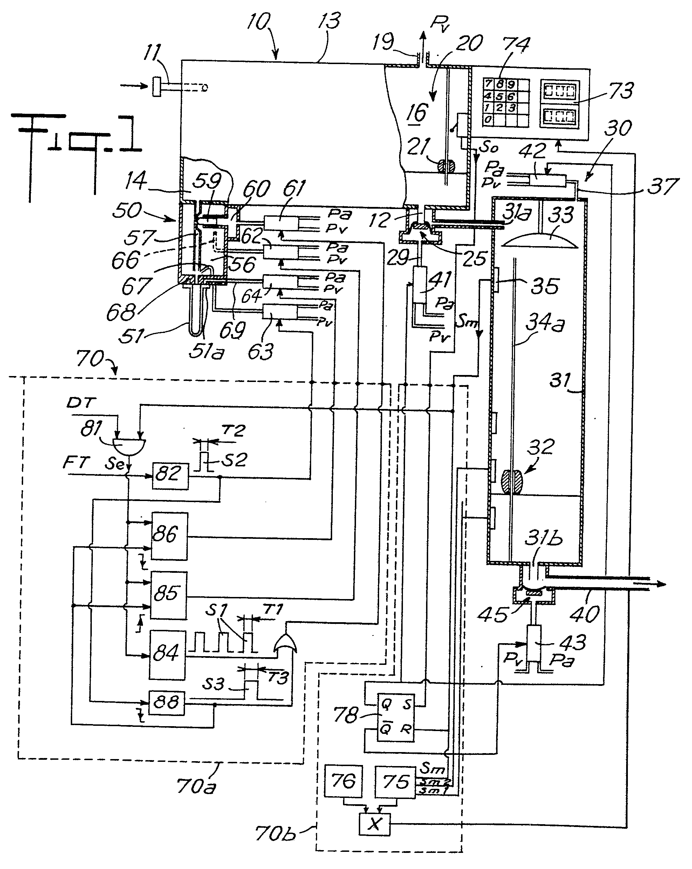

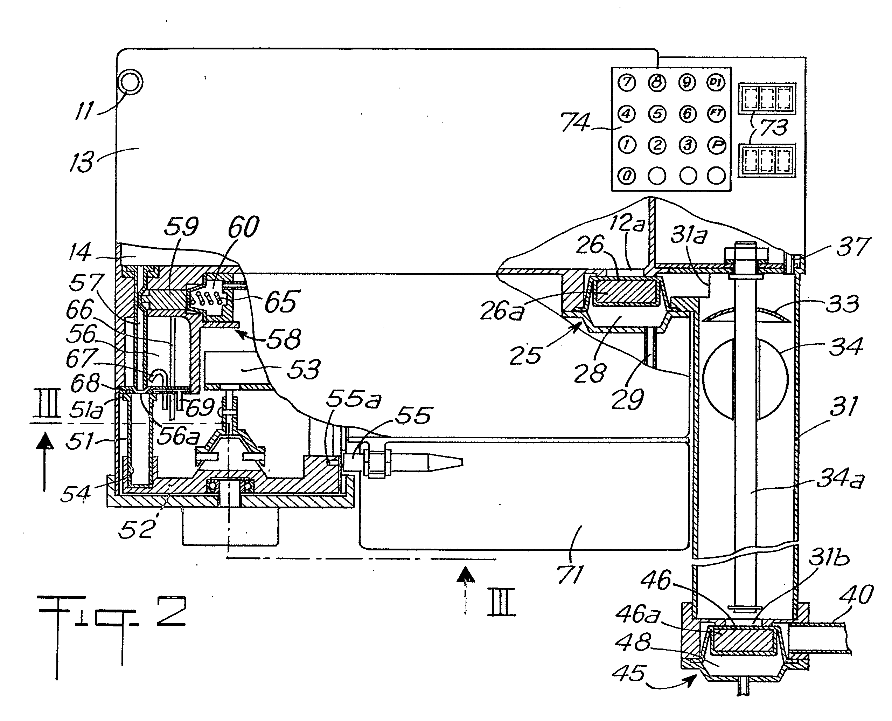

Comme cela apparaît sur les figures 1 et 2, le compteur à lait comporte un dispositif de dégazage 10 alimenté par une conduite 11 en lait provenant d'un faisceau trayeur (non représenté). La conduite de sortie 12 du dispositif de dégazage 10 est reliée à un dispositif de mesure 30 comportant un récipient de mesure 31 situé endessous du dispositif de dégazage et un capteur de niveau 32 intérieur ou extérieur au récipient 31. Des vannes d'entrée 25 et de sortie 45 à commande pneumatique sont montées sur la conduite 12 à l'entrée du récipient 31 et sur une conduite 40 à la sortie de ce récipient pour commander respectivement l'admission du lait désaéré dans le récipient 31 et l'évacuation du lait hors de ce récipient vers une cuve de stockage. Un dispositif 50 de prélèvement d'échantillons est disposé sous le dispositif de dégazage et comporte des récipients à échantillons 51 répartis à la périphérie d'un plateau en forme de disque 52 pouvant tourner pour amener les récipients successivement en position de prélèvement.

Le dispositif de dégazage 10 comporte une enceinte 13 dans laquelle parvient la conduite 11. De préférence, on utilise un dispositif de dégazage qui réalise une désaération poussée du lait pour ne pas fausser la mesure dans le récipient 31. La conduite de sortie 12 est reliée à un orifice 12a formé à travers la paroi de fond d'un compartiment 16 en sortie du dispositif de dégazage. Une canalisation 19 reliée à une source à vide débouche dans la partie supérieure du compartiment 16.

Un détecteur de niveau 20, par exemple un détecteur à électrode ou un détecteur à flotteur 21 monté coulissant verticalement sur une tige 22 est disposé dans le compartiment de sortie 16. Le détecteur 20 fournit un signal So à un circuit électronique de commande 70 lorsque le lait atteint un niveau prédéterminé dans le compartiment de sortie 16. Le signal So est par exemple émis par suite de la fermeture d'un circuit électrique sous l'action du flotteur 21.

La vanne 25 (figures 1 et 2) montée sur la conduite 12 comporte une membrane souple 26 qui, en position de fermeture obture l'ouverture 12a. Lorsque la membrane est en position ouverte, le compartiment 16 communique avec le récipient 31. Le déplacement de la membrane 26 est commandé par la pression régnant dans une chambre de commande 28 située sous la membrane et pouvant être mise en communication avec l'atmosphère (pression Pa) ou une source de vide (pression Pv) sous la commande d'une électrovanne à trois voies 41 montée sur une canalisation 29 qui alimente la chambre 28. La fermeture de la vanne 25 est commandée en faisant régner la pression Pa dans la chambre 28 et son ouverture en mettant la chambre en communication avec la source de vide. Le passage de la vanne 25 en position ouverte est facilité en sollicitant la membrane 26 par une force de rappel, par exemple le poids d'une pièce métallique 26a collée sous la face inférieure de la membrane 26, ou la force de rappel élastique d'un ressort.

Le récipient de mesure 31 (figure 2) est, par exemple un récipient cylindrique vertical en verre ou matière plastique rigide transparente. Le lait désaéré entre dans le récipient 31 par une ouverture supérieure 31a et s'écoule dans le récipient par gravité. Un déflecteur 33 est placé au sommet du récipient 31 pour diriger le lait entrant contre ses parois et éviter ainsi la formation de mousse et de remous à la surface du lait.

Dans l'exemple illustré, le capteur 32 est un capteur de niveau à flotteur 34 coulissant sur une tige verticale 34a. Lorsque le flotteur 34 atteint un niveau prédéterminé, il actionne un détecteur à micro-interrupteur 35, ce qui provoque l'émission d'un signal de mesure Sm. Plusieurs autres détecteurs sont répartis entre le fond du récipient 31 et le détecteur 35 pour émettre des signaux Sm1, Sm2, ..., lorsque leur niveau est atteint par le liquide dans le récipient 31. Les détecteurs peuvent être fixés à la paroi de récipient 31 ou, en variante, être logés dans la tige 34a.

Une électrovanne à trois voies 42 (figure 1) est montée sur une conduite 37 qui débouche dans le récipient 31 à sa partie supérieure pour mettre l'intérieur de celui-ci en liaison avec l'atmosphère (Pa) ou la source de vide (Pv).

La vanne de sortie 45 (figures 1 et 2) a une structure identique à celle de la vanne d'entrée 25. Une membrane souple 46 chargée par une pièce 46a collée sur sa face inférieure obture ou libère une ouverture 31b au fond du récipient 31.

Le mouvement de la membrane 46 est commandé par une électrovanne à trois voies 43 qui met en communication une chambre de commande 48 avec l'atmosphère (Pa) ou la source de vide (Pv) pour fermer ou ouvrir la communication entre le récipient 31 et la conduite de sortie 40.

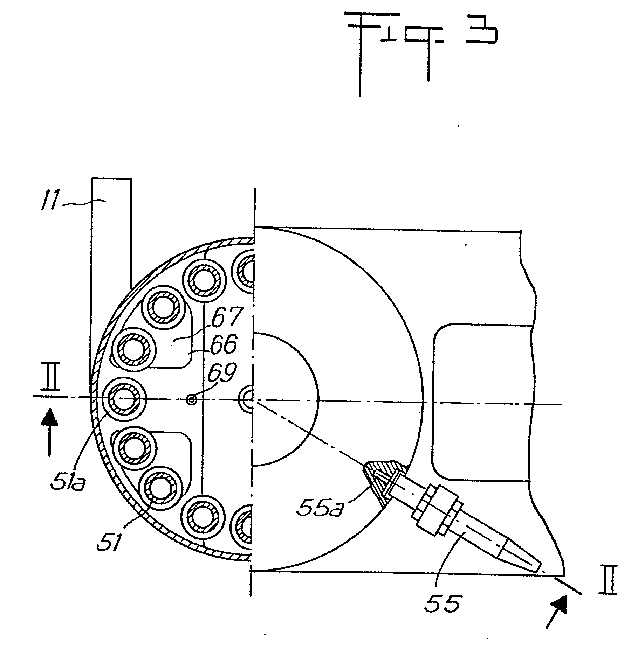

Le dispositif de prélèvement d'échantillons (figures 1, 2, 3) comporte un moteur 53 pour entraîner en rotation intermittente le plateau 52 qui porte les tubes à échantillons 51 maintenus verticalement dans des alvéoles 54 répartis le long du bord du plateau 52. Un détecteur de proximité 55 émet un signal à chaque fois que se présente devant lui un plot métallique 55a associé à un récipient à échantillon, le signal indiquant que ce récipient à échantillon est parvenu en position de prélèvement pour arrêter le moteur 53. Le plateau porte en outre un repère pour être placé toujours dans la même position au début d'une série de prélèvements d'échantillons afin de permettre l'identification ultérieure des tubes 51. Ce positionnement initial peut être réalisé automatiquement au moyen d'un second détecteur (non représenté).

Dans cette position, un récipient 51 est aligné verticalement avec un orifice 56a formé au fond d'une chambre 56. La chambre 56 est située sous le compartiment d'entrée 14 du dispositif de dégazage et communique avec celui-ci par une conduite de prélèvement 57 débouchant, à une extrémité, dans le fond du compartiment 14 et, à l'autre extrémité, dans la chambre 56 immédiatement au-dessus de l'orifice 56a.

Une vanne 58 est montée sur la conduite 57 pour ouvrir ou fermer celle-ci. Cette ouverture ou fermeture est réalisée au moyen d'un piston 59 soumis, contre sa face arrière à la pression d'une chambre de commande 60. Une électrovanne à trois voies 61 fait communiquer la chambre 60 avec l'atmosphère (Pa) ou la source de vide (Pv). La conduite 57 est réalisée en un matériau souple. Lorsque la pression Pa règne dans la chambre 60, le piston 59 est déplacé vers l'avant et provoque la fermeture par écrasement de la conduite 57. Un ressort 65 exerce en permanence une force de rappel élastique sur le piston 59.

Une conduite 66 débouche dans la partie supérieure de la chambre 56 et fait communiquer celle-ci avec l'atmosphère (Pa) ou la source de vide (Pv) sous la commande d'une électrovanne à trois voies 62. Une autre conduite 67 débouche à proximité de l'orifice 56a, au fond de la chambre 56 pour homogénéiser par jet d'air le lait prélevé pour l'échantillon. Une électrovanne à deux voies 63 commande l'ouverture de la conduite 67 à l'atmosphère (Pa) ou sa fermeture.

Une gorge annulaire 68 est formée autour de l'orifice 56a dans la paroi de fond de la chambre 56, du côté extérieur. Cette gorge a un diamètre moyen et une largeur tels qu'elle puisse être complètement obturée par le rebord annulaire 51a qui entoure l'ouverture de chaque tube à échantillon 51. Une électrovanne à trois voies 64 est montée sur un conduit 69 qui communique avec la gorge 68 pour mettre celle-ci en communication avec l'atmosphère (Pa) ou la source de vide (Pv).

Les électrovannes 41 à 43 et 61 à 64, le circuit électronique 70 et le moteur 53 sont alimentés électriquement au moyen d'une batterie d'accumulateurs 71 (figure 2). Un branchement unique (non représenté) est prévu pour relier le compteur à la source de vide, qui peut être avantageusement celle de l'installation de traite, les électrovannes étant reliées à ce branchement par des conduites non représentées. Bien entendu, on pourrait aussi utiliser une source de vide extérieure.

La mise en place du compteur à lait prêt à fonctionner ne nécessite donc que les raccordements des conduites 11 et 40 et le branchement à la source de vide. La batterie 71 peut encore alimenter un dispositif d'affichage électroluminescent 73 sur lequel peuvent être visualisés le numéro d'un animal en cours de traite et la quantité de lait produite. Le numéro de l'animal peut être obtenu par frappe sur un clavier à touches numériques 74 ou par détection d'un signal fourni au moyen d'un dispositif d'identification porté par l'animal. Les informations visualisées peuvent éventuellement être imprimées au moyen d'une imprimante analogue à celles utilisées pour les petites machines à calculer électroniques.

Avantageusement, le dispositif de prélèvement d'échantillons est réalisé sous forme d'un sous-ensemble qui peut facilement être démonté du reste du compteur. Le circuit 70 comporte alors deux parties 70a, 70b intégrées respectivement au bloc formant le dispositif de prélèvement d'échantillons et au sous-ensemble de mesure, les deux parties de circuit étant reliées électriquement par un connecteur unique. Ainsi, la partie mesure du compteur à lait peut rester à demeure dans l'installation de traite et la partie prélèvement d'échantillons y est raccordée uniquement lors des contrôles laitiers périodiques.

Le fonctionnement du compteur à lait décrit ci-dessus est le suivant (figure 1) :

Le faisceau trayeur étant mis en place, il est mis sous vide en actionnant une touche DT (début de traite) du clavier 74.

En réponse au signal So, les électrovannes 43, 42 et 41 sont actionnées de manière à fermer la vanne 45 (pression Pa dans la chambre 48), relier le récipient 31 à la source de vide par la conduite 37 et ouvrir la vanne 25 (pression Pv dans la chambre 28). L'ouverture de la vanne 25 peut être légèrement retardée par rapport aux deux autres opérations.

Le récipient 31 se remplit de lait désaéré jusqu'à émission du signal Sm.

En réponse au signal Sm, la vanne 25 est fermée et, après temporisation éventuelle, la pression atmosphérique est rétablie dans le récipient 31 par la conduite 37 et la vanne de sortie 45 est ouverte.

Les signaux So et Sm commandent par exemple les changements d'état d'une bascule bistable 78 ayant des sorties inverseuse et non inverseuse commandant, respectivement, l'électrovanne 43 et les électrovannes 41, 42.

Un nouveau cycle de mesure ne commence qu'après réception d'un nouveau signal So, ce qui laisse largement le temps au récipient 31 de se vider.

Chaque signal Sm1, Sm2, ..., Sm est appliqué à un circuit de comptage 75 dont le contenu est cumulé. Le contenu du circuit de comptage 75 est augmenté d'un incrément en réponse à chaque signal Sm1, Sm2, ..., Sm, dans la mesure où les détecteurs sont placés à intervalles réguliers. Ce contenu est multiplié par un nombre stocké dans un registre 76 et représentant la quantité de lait correspondante à chaque incrément du circuit de comptage 75 et exprimée en unités de mesure désirées (poids ou volume). Le produit des contenus du compteur 75 et du registre 76 est affiché en permanence par le dispositif de visualisation 73. Lorsqu'une imprimante est prévue, ce résultat peut être imprimé sous la commande par exemple d'une touche du clavier.

Un prélèvement d'échantillons peut être effectué au cours de chaque traite. A cet effet, au début de la traite, l'opérateur actionne une touche P du clavier 74 pour ouvrir une porte 81 qui reçoit les signaux Sm émis au cours de la traite (A titre de variante, un dispositif de comptage pourrait être prévu pour que seulement un signal Sm sur *n* émis, et non le premier, soit appliqué à la porte 81).

En réponse au signal Sm, la porte 81 émet en sortie un signal Se qui déclenche des bascules 85 et 86 pour commander les électrovannes 62 et 64 pour la mise sous vide de la chambre 56 et de la gorge 68, la conduite 57 étant fermée.

En outre, chaque signal Se déclenche le fonctionnement d'un circuit 84 qui produit une, et de préférence plusieurs (par exemple trois) impulsions S1 de durée T1 prédéterminée relativement faible. Lorsque plusieurs impulsions S1 sont produites, on détermine leur fréquence de manière que la dernière se termine toujours avant l'émission du signal Sm suivant. Chaque impulsion S1 commande l'électrovanne 61 pour ouvrir la conduite 57.

Ainsi, après chaque signal de mesure, on prélève du lait pendant une ou plusieurs périodes courtes déterminées.

En fin de traite, un signal de fin de traite est émis par action sur une touche FT du clavier 74. Ce signal provoque le déclenchement d'un monostable 82 qui produit une impulsion S2 de durée T2 prédéterminée relativement brève. La conduite 57 est fermée et le lait contenu dans le tube 51 et le fond de la chambre 56 est homogénéisé par le jet d'air résultant de l'ouverture de la conduite 67 par l'impulsion S2.

Le front descendant de l'impulsion S2 lance un monostable 88 qui produit une impulsion S3 de durée T3 prédéterminée pour ramener la bascule 85 à son état initial et pour ouvrir la conduite 57 pour la durée T3 pendant laquelle le lait en excès dans la chambre 56 et la conduite 57 est refoulé vers le dispositif de dégazage à la suite du rétablissement de la pression atmosphérique dans la chambre 56. Le front descendant de l'impulsion S3 ramène la bascule 86 à l'état initial et le tube à échantillon plein est libéré tandis que la conduite 57 est fermée.

Le cycle de prélèvement d'échantillons est terminé. On dispose ainsi d'un échantillon d'un volume déterminé quelle que soit la quantité de lait comptée.

En vue d'un traitement ultérieur, différentes informations peuvent être mémorisées au cours de chaque traite sous forme numérique : par exemple le numéro d'identification de l'animal, le numéro d'ordre du tube à échantillons sur le plateau, des quantités de lait produites au bout de temps déterminé, la quantité de lait totale, le temps de traite, ... Certaines de ces informations peuvent éventuellement être imprimées sur place.

**Revendications**

1. Compteur de liquide, notamment compteur à lait, comportant un dispositif de mesure (30) recevant le liquide dégazé au moyen d'un dispositif de dégazage (10), une première et une seconde vannes (25, 45) actionnées pneumatiquement pour commander respectivement l'entrée de liquide dans le dispositif de mesure et la sortie de liquide hors du dispositif de mesure, un capteur (32) associé au dispositif de mesure pour fournir un signal de mesure (Sm) à chaque fois qu'une quantité prédéterminée de liquide inférieure à la capacité totale du dispositif de mesure a été introduite dans celui-ci, et un dispositif (70) de commande et de comptage recevant les signaux de mesure et commandant les première et seconde vannes pour provoquer la sortie du liquide hors du dispositif de mesure à chaque fois que ladite quantité prédéterminée y a été introduite, compteur caractérisé en ce qu'il comporte en outre un dispositif (50) de prélèvement d'échantillons avec une conduite de prélèvement (57) qui est munie d'une troisième vanne (58) et qui relie le dispositif de dégazage (10) à un orifice (56a) formé dans le fond d'une chambre (56) dans laquelle s'étend la conduite de prélèvement, orifice auquel un récipient à échantillon (51) peut être raccordé à l'extérieur de la chambre, et en ce que lesdites première, seconde et troisième vannes (25, 45, 58) sont actionnées au moyen d'électrovannes (41, 43, 61) commandées par des signaux électriques produits par le dispositif (70) de commande et de comptage en réponse aux signaux de mesure (Sm), la troisième vanne (58) étant commandée pour ouvrir la conduite de prélèvement (57), pendant un intervalle de temps (T1) déterminé, en réponse à au moins un signal de mesure (Sm) produit au cours d'une opération de comptage.

2. Compteur de liquide selon la revendication 1, caractérisé en ce que la vanne (58) de la conduite de prélèvement (57) est commandée par le dispositif (70) de commande et de comptage en réponse à chaque signal de mesure (Sm) pour ouvrir la conduite de prélèvement (57) pendant ledit intervalle de temps déterminé (T1) au moins une fois pour chaque mesure de ladite quantité prédéterminée de liquide.

3. Compteur de liquide selon l'une quelconque des revendications 1 et 2, caractérisé en ce qu'une conduite (67) susceptible d'être raccordée à l'atmosphère et munie d'une quatrième vanne (63), débouche dans la chambre (56) à proximité dudit orifice (56a), l'ouverture de cette quatrième vanne étant commandée par le dispositif (70) de commande et de comptage en réponse à un signal particulier (S2) de manière à homogénéiser par un jet d'air le liquide qui a été prélevé à travers la conduite de prélèvement.

4. Compteur de liquide selon l'une quelconque des revendications 1 à 3, caractérisé en ce qu'une conduite (66) susceptible d'être raccordée à l'atmosphère et munie d'une cinquième vanne (62) débouche dans la chambre (56), l'ouverture de cette cinquième vanne étant commandée par le dispositif (70) de commande et de comptage en réponse à un signal particulier de manière à refouler le liquide en excès dans ladite chambre à la fin d'une opération de comptage.

5. Compteur de liquide selon l'une quelconque des revendications 1 à 4, caractérisé en ce que le récipient à échantillon (51) est déplaçable au moyen d'un support mobile (52) pour être amené automatiquement en position de prélèvement et ledit orifice (56a) formé au fond de la chambre (56) est entouré à l'extérieur de celle-ci par une gorge annulaire (68) susceptible d'être raccordée à une source de vide ou à l'atmosphère au moyen d'une sixième vanne (64) qui est commandée par le dispositif (70) de commande et de comptage, le récipient à échantillon (51) étant muni autour de son ouverture d'un rebord supérieur annulaire (51a) susceptible d'être appliqué contre ladite gorge lorsqu'une dépression est établie dans celle-ci tandis que le récipient est en position de prélèvement.

6. Compteur de liquide selon l'une quelconque des revendications 1 à 5 pour mesurer la quantité de lait produite par un animal dans une salle de traite, le compteur étant destiné à être branché sur une conduite (11) d'évacuation du lait en aval d'un faisceau trayeur et à être relié à la source de vide de la salle de traite, caractérisé en ce que le dispositif (70) de commande et de comptage comporte des moyens pour enregistrer sous forme numérique des informations comportant l'identification d'un animal et la quantité de lait produite par cet animal au cours d'une traite.

7. Compteur de liquide selon la revendication 6, caractérisé en ce qu'il comporte une batterie d'alimentation électrique (71) autonome pour alimenter les électrovannes et les circuits du dispositif de commande et de comptage.

8. Compteur de liquide selon l'une quelconque des revendications 6 et 7, caractérisé en ce qu'il comporte un clavier (74) notamment pour l'introduction de l'information relative à l'identification de l'animal devant être trait.

9. Compteur de liquide selon l'une quelconque des revendications 6 à 8, caractérisé en ce qu'il comporte un dispositif d'affichage (73) d'au moins lesdites informations relatives à l'identification de l'animal et à la quantité de lait produite.

**Claims**

1. Liquid metering unit, and in particular milk metering unit, comprising a measuring device (30) receiving the liquid from which the gas has been removed by way of an outgassing device (10), first and second valves (25, 45) actuated pneumatically to control respectively the admission of the liquid into the measuring device, and its discharge therefrom, a sensor (32) associated to the measuring device to issue a measuring signal (Sm) every time a predetermined quantity of liquid smaller than the total capacity of the measuring device has been introduced therein, and a control and counting device (70) receiving the measuring signals and controlling the first and second valves to cause the discharge of the liquid out of the measuring device every time said predetermined quantity is introduced therein, metering unit characterized in that it further comprises a device (50) for taking samples with a sampling duct (57) which is equipped with a third valve (58) and connects the outgassing device (10) with an orifice (56a) provided in the bottom of a chamber (56) into which extends the said sampling duct, and to which orifice a sample container (51) can be connected outside said chamber, and in that said first, second and third valves (25, 45, 58) are actuated by way of electrovalves (41, 43, 61) controlled by electrical signals produced by the control and counting device (70) in response to the measuring signals (Sm), the third valve (58) being controlled to open the sampling duct (57) for a predetermined period of time (T1), in response to at least one measuring signal (Sm) produced during a counting operation.

2. Liquid metering unit according to claim 1, characterized in that the valve (58) of the sampling duct (57) is controlled by the control and counting device (70) in response to each measuring signal (Sm) to open the sampling duct (57) during the said predetermined period of time (T1) at least once for each measurement of the said predetermined quantity of liquid.

3. Liquid metering unit according to any one of claims 1 and 2, characterized in that a pipe (67) adapted to be connected with the atmosphere and equipped with a fourth valve (63) issues into the chamber (56) close to the said orifice (56a), the opening of said fourth valve being controlled by the control and counting device (70) in response to a special signal (S2) so as to homogenize by a jet of air, the sample of liquid admitted through the sampling duct.

4. Liquid metering unit according to any one of claims 1 to 3, characterized in that a pipe (66) adapted to be connected with the atmosphere and provided with a fifth valve (62) issues into the chamber (56), the opening of said fifth valve being controlled by the control and counting device (70) in response to a special signal so as to deliver the excess liquid into said chamber at the end of counting operation.

5. Liquid metering unit according to any one of claims 1 to 4, characterized in that the sample container (51) is displaceable by way of a movable support (52) to be brought automatically in a sampling position and said orifice (56a) provided at the bottom of the chamber (56) is surrounded on the outside of said chamber by an annular groove (68) adapted to be connected with a vacuum source or with the atmosphere by way of a sixth valve (64) which is controlled by the control and counting device (70), the sample container (51) being provided around its opening with an annular upper rim (51a) adapted to be applied against said groove when a depression is created therein whilst the container is in the sampling position.

6. Liquid metering unit according to any one of claims 1 to 5 for measuring the quantity of milk produced by an animal in a milking installation, the meter being designed to be connected with a milk discharge pipe (11) downstream of a milking harness and to be connected to the source of vacuum of the milking installation, characterized in that the control and counting device (70) comprise means to record in digital form items of information including the identification of an animal and the quantity of milk produced by same animal during a milking cycle.

7. Liquid metering unit according to claim 6, characterized in that it comprises an electrical supply battery (71) which is self-contained and supplies the electrovalves and the circuits of the control and counting device.

8. Liquid metering unit according to any one of claims 6 and 7, characterized in that it comprises a keyboard (74) which is used in particular to introduce the information relative to the identification of the animal to be milked.

9. Liquid metering unit according to any one of claims 6 to 8, characterized in that it comprises display means (73) to display at least the said information relative to the identification of the animal and to the quantity of milk produced.

**Ansprüche**

1. Flüssigkeitszähler, insbesondere Milchzähler, mit einer Meßeinrichtung (30), die die mittels einer Entgasungseinrichtung (10) entgaste Flüssigkeit empfängt, einem ersten und einem zweiten Ventil (25, 45), welche zur Steuerung des Flüssigkeitseintritts in die Meßeinrichtung bzw. des Flüssigkeitsaustritts aus der Meßeinrichtung pneumatisch betätigt werden, einem mit der Meßeinrichtung verbundenen Meßfühler (32) zur Abgabe eines Meßsignals (Sm) jedesmal, wenn eine vorbestimmte Flüssigkeitsmenge, die niedriger als die Gesamtkapazität der Meßeinrichtung ist, in dieselbe eingeleitet wurde, und einer Steuer- und Zähleinrichtung (70), die die Meßsignale empfängt und das erste und zweite Ventil zur Freigabe des Austritts der Flüssigkeit aus der Meßeinrichtung jedesmal, wenn die vorbestimmte Menge dort eingeleitet wurde, steuert, dadurch gekennzeichnet, daß er weiters eine Einrichtung (50) zur Probenentnahme mit einer Entnahmeleitung (57) umfaßt, welche mit einem dritten Ventil (58) versehen ist und die Entgasungseinrichtung (10) mit einer im Boden einer Kammer (56), in die sich die Entnahmeleitung erstreckt, gebildeten Öffnung (56a) verbindet, an welche Öffnung ein Probenbehälter (51) außerhalb der Kammer anschließbar ist, und daß das erste, zweite und dritte Ventil (25, 45, 58) durch Elektroventile (41, 43, 61) betätigt werden, welche durch von der Steuer- und Zähleinrichtung in Antwort auf die Meßsignale (Sm) erzeugte elektrische Signale gesteuert werden, wobei das dritte Ventil (58) zum Öffnen der Entnahmeleitung (57) während eines festgelegten Zeitintervalls (T1) in Antwort auf zumindest ein im Verlauf des Zählvorganges erzeugtes Meßsignal (Sm) gesteuert wird.

2. Flüssigkeitszähler nach Anspruch 1, dadurch gekennzeichnet, daß das Ventil (58) der Entnahmeleitung (57) zwecks Öffnung der Entnahmeleitung (57) während des festgelegten Zeitintervalls (T1) zumindest einmal pro jeder Messung der vorbestimmten Flüssigkeitsmenge durch die Steuer- und Zähleinrichtung (70) in Antwort auf jedes Meßsignal (Sm) gesteuert wird.

3. Flüssigkeitszähler nach einem der Ansprüche 1 und 2, dadurch gekennzeichnet, daß eine an die Atmosphäre anschließbare und mit einem vierten Ventil (63) versehene Leitung (67) in die Kammer (56) in der Nähe der Öffnung (56a) einmündet, wobei das Öffnen des vierten Ventils durch die Steuer- und Zähleinrichtung (70) in Antwort auf ein besonderes Signal (S2) so gesteuert wird, daß die durch die Entnahmeleitung entnommene Flüssigkeit durch einen Luftstrom homogenisiert wird.

4. Flüssigkeitszähler nach einem der Ansprüche 1 bis 3, dadurch gekennzeichnet, daß eine an die Atmosphäre anschließbare und mit einem fünften Ventil (62) versehene Leitung (66) in die Kammer (56) einmündet, wobei das Öffnen dieses fünften Ventils durch die Steuer- und Zähleinrichtung (70) in Antwort auf ein besonderes Signal so gesteuert wird, daß am Ende eines Zählvorganges die überschüssige Flüssigkeit in die Kammer rückgeführt wird.

5. Flüssigkeitszähler nach einem der Ansprüche 1 bis 4, dadurch gekennzeichnet, daß der Probenbehälter (51) zur automatischen Führung in die Entnahmestellung mittels eines beweglichen Trägers (52) verschiebbar ist und die am Boden der Kammer (56) gebildete Öffnung (56a) außerhalb derselben von einem Ringdurchlaß (68) umgeben ist, welcher mittels eines sechsten, durch die Steuer- und Zähleinrichtung (70) gesteuerten Ventils (64) an eine Vakuumquelle oder an die Atmosphäre anschließbar ist, wobei der Probenbehälter (51) um seine Öffnung mit einer oberen Ringleiste (51a) versehen ist, die bei Bildung eines Unterdrucks im Durchlaß, wenn sich der Behälter in Entnahmestellung befindet, gegen den Durchlaß gedrückt werden kann.

6. Flüssigkeitszähler nach einem der Ansprüche 1 bis 5 zur Messung der von einem Tier in einem Melkstand abgegebenen Milchmenge, wobei der Zähler dazu bestimmt ist, von einer Leitung (11) zur Entleerung der Milch unterhalb eines Melkzeugs abzuzweigen und an die Vakuumquelle des Melkstandes angeschlossen zu werden, dadurch gekennzeichnet, daß die Steuer- und Zähleinrichtung (70) Mittel zur numerischen Registrierung von Informationen bezüglich der Identität eines Tieres und der von ihm während eines Melkvorganges erzeugten Milchmenge umfaßt.

7. Flüssigkeitszähler nach Anspruch 6, dadurch gekennzeichnet, daß er eine autonome elektrische Speisebatterie (71) zur Speisung der elektrischen Ventile und der Kreise der Steuer- und Zähleinrichtung umfaßt.

8. Flüssigkeitszähler nach einem der Ansprüche 6 und 7, dadurch gekennzeichnet, daß er eine Tasteneinheit (74), insbesondere zur Eingabe der Information bezüglich der Identität des Tieres vor dem Melken, umfaßt.

9. Flüssigkeitszähler nach einem der Ansprüche 6 bis 8, dadurch gekennzeichnet, daß er eine Einrichtung (73) zur Anzeige von zumindest den Informationen bezüglich der Identität des Tieres und der erzeugten Milchmenge umfaßt.

Fig.1

Fig. 2

Fig. 3